# DEMANDE DE BREVET EUROPEEN

(11) **EP 2 546 025 A1**
(43) Date de publication de la demande: **16.01.2013**
(21) Numéro de dépôt: 11173999.1
(22) Date de dépôt: 14.07.2011
(51) Int. Cl.: B23Q 17/22, B23B 25/06

(54) **Procédé de centrage d'outils sur une machine de décolletage et dispositif d'aide au centrage pour mettre en oeuvre ledit procédé**

(71) Demandeur: Wibemo S.A., 2832 Rebeuvelier (CH)
(72) Inventeur: Ambühl, Stéphane, 2740 Moutier (CH); Vedelago, David, 2710 Tavannes (CH); Liechti, Alain, 2738 Court (CH)
(74) Mandataire: GLN

(57) **Abrégé**

La présente invention concerne un dispositif d'aide au centrage d'un outil sur une machine de décolletage (2) comportant un dispositif de canon tournant (3), caractérisé en ce qu'il comprend une bague d'adaptation (4) destinée à être fixée et solidarisée en rotation sur un nez (3a) du dispositif de canon tournant (3), une sonde de mesure (5) de distances montée sur la bague d'adaptation (4) de manière à venir en regard du corps de l'outil (1), lequel est monté dans une broche porte-outil (6) de la machine de décolletage (2), la bague d'adaptation (4) permettant de disposer la sonde de mesure (5) dans au moins trois positions de mesure distinctes et des moyens de traitement coopérant avec la sonde de mesure (5) pour traiter les valeurs mesurées par ladite sonde de mesure (5) et pour fournir des informations sur l'amplitude de déplacement à effectuer par la broche porte-outil (6) de manière à corriger l'écart de centrage de l'outil (1).

## Description

### Domaine technique

La présente invention se rapporte au domaine technique général de l'usinage. L'invention se rapporte plus particulièrement au centrage d'outils sur des machines du genre tours à commande numérique. Ces machines, appelées plus précisément des machines de décolletage, comportent un dispositif de canon tournant.

Les machines de décolletage dont il est question dans la présente invention, permettent en général d'usiner des pièces de faibles dimensions utilisées par exemple dans l'horlogerie, dans le domaine de l'automobile, dans l'électronique ou dans le domaine médical. Pour les pièces de haute précision présentant des dimensions réduites, la précision de positionnement des outils et notamment leur centrage, est essentielle.

Un tel centrage permet également de définir une position de référence la plus précise possible, à partir de laquelle sont calculés des déplacements d'outils lors d'opérations d'usinage. L'invention permet de centrer des outils tels que des mèches ou autres outils à corps cylindrique, montés sur une broche et au centre des roulements d'un porte-canon, ledit centre constituant en somme un centre absolu.

L'invention concerne plus particulièrement le centrage d'outils de perçage, d'outils en bout, de broches de perçage ou de broches de contre-perçage.

Pour des raisons de simplification de la présentation, il sera fait référence dans la suite de la description, à des outils qu'il conviendra d'entendre au sens large, c'est-à-dire comprenant notamment les exemples précités.

Un outil, par exemple un outil en bout, présentant un écart de centrage, subit d'énormes contraintes mécaniques, qui conduisent souvent à une rupture prématurée dudit outil. Un centrage précis de l'outil permet de réduire substantiellement les contraintes mécaniques auxquelles est soumis l'outil et d'augmenter par conséquent la durée de vie dudit outil.

### Etat de la technique

Différentes méthodes de centrage de broches sont connues. On connait ainsi la méthode appelée « centrage pointe à pointe », laquelle consiste à former une pointe sur une barre de matière, de manière présenter un cône d'environ 20° à 30°. Une même pointe est formée sur un barreau en métal dur. On dispose ensuite les deux pointes en vis-à-vis et on procède au centrage, à l'aide d'un instrument du genre loupe. Une telle méthode présente l'inconvénient de reposer exclusivement sur l'expérience et sur la précision de la vue d'un opérateur.

Une autre méthode appelée « centrage pointe étampe sur matière » consiste à utiliser un barreau de métal dur présentant un pointe et une barre de matière. On présente le barreau de métal dur face à la barre et on étampe une marque sur quelques centièmes de millimètres. Cette marque va permettre de définir si la pointe de l'outil est centré ou non. On réalise un second point de centre, mis hors centre, après avoir déplacé le barreau pour déterminer un axe de déplacement et coupé un lopin de matière. On mesure ensuite si le second point de centre ainsi obtenu est bien centré avec un microscope. Dans la négative on corrige le décentrage mesuré en déplaçant le barreau suivant l'axe de déplacement, mécanique ou numérique selon le type de machine. On répète ensuite l'opération d'étampage pour s'assurer que la correction est bonne. Une telle méthode de centrage nécessite beaucoup de temps. Il n'est pas rare que l'obtention d'un centrage correcte nécessite jusqu'à deux heures.

Une autre méthode appelée « centrage type comparateur » consiste à disposer un comparateur dans une pince ou dans une broche de perçage. On mesure ensuite, sur un barreau de métal ou sur le cône du porte-canon ou de la broche de perçage, la concentricité pour effectuer un centrage. Cette méthode détermine une concentricité d'ensemble et non la concentricité du barreau par rapport au canon. L'utilisation d'un comparateur génère par ailleurs un porte-à-faux d'environ 50 mm à 80 mm. Une erreur de centrage est donc possible sur une telle distance.

Toutes ces méthodes ont en commun de présenter un manque de précision manifeste. En effet, la précision atteinte avec ces méthodes est de l'ordre du centième de millimètre. Une telle précision de centrage n'est souvent pas compatible avec la fabrication de pièce de haute précision présentant des dimensions très réduites.

On connaît également par l'intermédiaire du document WO 2007/02393, un dispositif optique de réglage de la position des outils de coupe ou en bout par rapport à un axe central d'un canon de guidage de la pièce à traiter, d'un tour automatique. Ce dispositif comprend au moins une caméra pourvue d'au moins un tube d'extension munie d'au moins une lentille. Ce dispositif comprend également un ordinateur auquel est transmise l'image de l'ouverture du canon de guidage et d'une partie de l'outil. Un tel dispositif présente l'inconvénient de nécessiter des moyens complexes, notamment optiques et informatiques pour procéder à un réglage. Le procédé mis en oeuvre par un tel dispositif est également complexe dans la mesure où il comprend des étapes au cours desquelles, un positionnement et un réglage d'éléments optiques sont nécessaires. En outre, une grande précision dans la montage du dispositif est requise. Un tel réglage peut donc s'avérer long et difficile pour un opérateur habituel travaillant sur une machine de décolletage. Il faut aussi veiller à une très grande propreté. En effet, les éléments optiques ne sont plus fiables dès la présence de la moindre goutte d'huile.

### Divulgation de l'invention

L'objet de l'invention vise à remédier aux inconvénients précités en fournissant un nouveau dispositif d'aide au centrage d'outils pour des machines de décolletage, améliorant substantiellement la précision de centrage.

Un autre objet de la présente invention vise à proposer un nouveau procédé de centrage d'outils sur des machines de décolletage, permettant notamment de simplifier les opérations de centrage et de diminuer le temps nécessaire aux dites opérations de centrage.

Les objets assignés à l'invention sont atteint à l'aide d'un procédé de centrage d'un outil ou d'une broche porte-outil d'une machine de décolletage comportant un dispositif de canon tournant,
caractérisé en ce qu'il consiste à :
- a) monter l'outil dans une broche porte-outil,
- b) fixer une sonde de mesure de distances sur le nez du dispositif de canon tournant ou sur une pince de canon tournant,
- c) déplacer la broche porte-outil pour amener le corps de l'outil en regard de la sonde de mesure,
- d) tourner le dispositif de canon tournant pour placer la sonde de mesure dans une première position de mesure,
- e) effectuer au moins une première mesure de la distance séparant la sonde de mesure de l'outil,
- f) utiliser la première mesure pour initialiser la sonde de mesure,
- g) tourner le dispositif de canon tournant pour placer la sonde de mesure dans une seconde position de mesure, espacée angulairement d'environ 180° de la première position de mesure,
- h) effectuer au moins une mesure complémentaire de la distance séparant la sonde de mesure de mesure de l'outil,
- i) utiliser la valeur de la deuxième mesure, correspondant à un écart de centrage selon une direction déterminée, pour corriger la position de la broche porte-outil et annuler l'écart de centrage,
- j) tourner le dispositif de canon tournant pour placer la sonde de mesure dans une troisième position de mesure, espacée angulairement d'environ 90° de la première position de mesure et reprendre les étapes h) et i).

Selon un exemple de mise en oeuvre, le procédé conforme à l'invention consiste à utiliser un détecteur inductif comme sonde de mesure.

Selon un exemple de mise en oeuvre, le procédé conforme à l'invention consiste à vérifier que la sonde de mesure est disposée à une distance optimale du corps cylindrique de l'outil avant d'effectuer des mesures.

Selon un exemple de mise en oeuvre, le procédé conforme à l'invention consiste à afficher le résultat de la première mesure au cours de l'étape e) et à ramener à zéro l'affichage au cours de l'étape f).

Selon un exemple de mise en oeuvre, le procédé conforme à l'invention consiste à afficher le résultat de la seconde mesure au cours de l'étape h) et à déplacer la broche porte-outil pour ramener l'affichage à zéro au cours de l'étape i).

Selon un exemple de mise en oeuvre, le procédé conforme à l'invention consiste à utiliser des moyens automatisés de la machine de décolletage pour mettre en oeuvre au moins certaines des étapes a) à j).

Les objets assignés à l'invention sont également atteints à l'aide d'un dispositif d'aide au centrage d'un outil sur une machine de décolletage comportant un dispositif de canon tournant, caractérisé en ce qu'il comprend :
- une bague d'adaptation destinée à être fixée et solidarisée en rotation sur un nez du dispositif de canon tournant ou sur une pince de canon tournant,
- une sonde de mesure de distances montée sur la bague d'adaptation de manière à venir en regard d'une partie cylindrique de l'outil, lequel est monté dans une broche porte-outil de la machine de décolletage, la bague d'adaptation permettant de disposer la sonde de mesure dans au moins trois positions de mesure distinctes,
- des moyens de traitement coopérant avec la sonde de mesure pour traiter les valeurs mesurées par ladite sonde de mesure et pour fournir des informations sur l'amplitude de déplacement à effectuer par la broche porte-outil de manière à corriger l'écart de centrage de l'outil.

Selon un exemple de réalisation du dispositif conforme à l'invention, la sonde de mesure est un détecteur inductif.

Selon un exemple de réalisation du dispositif conforme à l'invention, les moyens de traitement comprennent un boîtier de calcul, de mise en forme et d'affichage des valeurs mesurées par la sonde de mesure.

Selon un exemple de réalisation du dispositif conforme à l'invention, les moyens de traitement comprennent une carte électronique et un moyen d'initialisation ou de remise à zéro de l'affichage.

Selon un exemple de réalisation du dispositif conforme à l'invention, la sonde de mesure coopère avec les moyens de traitement par l'intermédiaire d'une liaison filaire.

Selon un autre exemple de réalisation du dispositif conforme à l'invention, la sonde de mesure coopère avec les moyens de traitement par l'intermédiaire d'une liaison sans fil comprenant un émetteur agencé sur la sonde de mesure et un récepteur relié aux moyens de traitement.

Selon un exemple de réalisation conforme à l'invention, le dispositif d'aide au centrage comprend un moyen pour ajuster la position de montage de la sonde de mesure sur la bague d'adaptation, permettant ainsi de positionner ladite sonde de mesure à une distance optimale de l'outil.

Selon un exemple de réalisation conforme à l'invention, le dispositif d'aide au centrage comprend un jeu de bagues d'adaptation, chacune des bagues d'adaptation étant conformée pour être fixée sur le nez d'un dispositif de canon tournant présentant des dimensions particulières.

Dans le cas où la machine ne permet pas de fixer la bague d'adaptation sur un nez de dispositif de canon tournant, la bague d'adaptation est fixée sur une pince de canon tournant.

Selon un exemple de réalisation du dispositif conforme à l'invention, la bague d'adaptation présente au moins un dégagement de matière pour permettre un contrôle visuel du positionnement de la sonde de mesure par rapport à l'outil dans sa position de travail.

Les objets assignés à l'invention sont également atteints à l'aide d'une machine de décolletage comportant un dispositif de canon tournant et des moyens de commande et de contrôle automatisés pour piloter le fonctionnement de ladite machine, caractérisée en ce qu'elle comprend un dispositif d'aide au centrage tel que présenté ci-dessus.

A titre d'exemple, les moyens de traitement sont intégrés aux moyens de commande et de contrôle automatisés de la machine de décolletage.

Un avantage du dispositif d'aide au centrage conforme à l'invention réside dans l'absence de contact entre un élément de mesure et l'outil pour effectuer le centrage. Aucune contrainte n'est ainsi exercée sur l'outil.

Un autre avantage du dispositif d'aide au centrage conforme à l'invention réside dans le fait que le centrage s'effectue en réalité sur l'axe des roulements entraînant le dispositif de canon tournant. Un mauvais centrage d'un canon de guidage n'est donc pas en mesure d'altérer le centrage absolu de l'outil.

Le dispositif d'aide au centrage conforme à l'invention présente aussi l'avantage d'être constitué d'éléments simples à fabriquer et à utiliser.

Le procédé de centrage correspondant peut ainsi être entrepris par un opérateur habituel travaillant sur une machine de décolletage. Aucune utilisation de compétences supplémentaires n'est nécessaire pour effectuer le centrage de l'outil.

Le dispositif d'aide au centrage conforme à l'invention présente aussi l'avantage de diminuer substantiellement le temps nécessaire aux opérations de centrage. En effet, une opération de centrage d'un outil avec un dispositif de centrage conforme à l'invention nécessite environ cinq minutes, alors qu'une opération de centrage utilisant des moyens de l'état de la technique nécessite au moins une heure.

Le dispositif de centrage conforme à l'invention présente aussi l'avantage d'augmenter la précision du centrage. Avec un dispositif de centrage conforme à l'invention, il devient possible d'atteindre une précision de l'ordre du 1/1000 de millimètre, alors que les moyens de l'état de la technique ne permettent d'atteindre qu'une précision de l'ordre du 1/100 de millimètre.

Le procédé conforme à l'invention est remarquable dans la mesure où le centrage est effectué avec un outil disposé dans sa position de travail. Aucune opération de démontage/remontage n'est ainsi nécessaire une fois que l'outil est centré.

### Brève description des dessins

D'autres caractéristiques de la présente invention apparaîtront plus clairement à la lecture de la description qui va suivre, faite en référence au dessin annexé, donné à titre d'exemple non limitatif, dans lequel:
- la figure 1 est une illustration schématique d'un exemple de réalisation du dispositif d'aide au centrage conforme à l'invention dans une position de fonctionnement sur une machine de décolletage,
- la figure 2 est une représentation selon une vue en perspective d'un exemple de réalisation du dispositif d'aide au centrage conforme à l'invention,
- la figure 3 est une représentation selon une vue en perspective d'un exemple de réalisation d'un dispositif de canon tournant d'une machine de décolletage, sur lequel est destiné à coopérer avec le dispositif d'aide au centrage conforme à l'invention,
- la figure 4 est une vue de profil de la bague de mesure d'un exemple de réalisation du dispositif d'aide au centrage conforme à l'invention,
- la figure 5 est une vue selon la direction A de la bague d'adaptation de la figure 4,
- la figure 6 est une vue selon la direction B de la bague d'adaptation de la figure 4,
- et la figure 7 est une vue en perspective de la bague d'adaptation d'un exemple de réalisation du dispositif d'aide au centrage conforme à l'invention.

### Mode(s) de réalisation de l'invention

Les éléments structurellement et fonctionnellement identiques et présents sur plusieurs figures distinctes, sont affectés d'une même référence numérique ou alphanumérique.

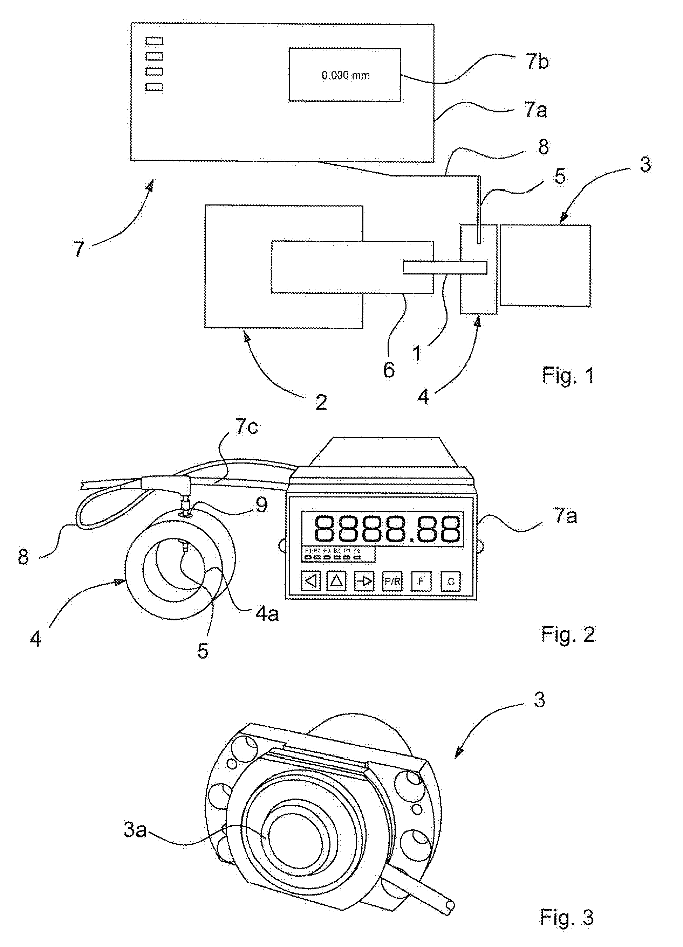

La figure 1 est une illustration schématique d'un exemple de réalisation d'un dispositif d'aide au centrage d'un outil 1 sur une machine de décolletage 2 comportant un dispositif de canon tournant 3.

Le dispositif d'aide au centrage comprend une bague d'adaptation 4 destinée à être fixée et solidarisée en rotation sur le dispositif de canon tournant 3.

Le dispositif d'aide au centrage comprend également une sonde de mesure 5 de distances, montée sur la bague d'adaptation 4 de manière à venir en regard du corps cylindrique de l'outil 1.

L'outil 1 est par exemple monté dans une broche porte-outil 6 de la machine de décolletage 2.

La bague d'adaptation 4, présentant une forme cylindrique, permet de disposer la sonde de mesure 5 dans au moins trois positions de mesure distinctes localisées autour de l'outil 1, pour procéder au centrage de l'outil 1.

Le dispositif d'aide au centrage comprend également des moyens de traitement 7 coopérant avec la sonde de mesure 5, pour traiter les valeurs mesurées par ladite sonde de mesure 5 et pour fournir des informations sur l'amplitude du déplacement à effectuer par la broche porte-outil 6 de manière à corriger l'écart de centrage de l'outil 1.

Selon un exemple de réalisation du dispositif d'aide au centrage conforme à l'invention, la sonde de mesure 5 est avantageusement constituée d'un détecteur inductif.

Selon un exemple de réalisation du dispositif conforme à l'invention, les moyens de traitement 7 comprennent un boîtier 7a de calcul et d'affichage pour mettre en forme et afficher les valeurs mesurées par la sonde de mesure 5. Le boîtier 7a permet par exemple d'afficher avec un écran 7b des valeurs de mesure dont l'unité de mesure est sélectionnée par l'opérateur. L'alimentation électrique des composants du boîtier 7a est assurée par exemple par l'intermédiaire d'un cordon d'alimentation 7c.

Selon un exemple de réalisation du dispositif conforme à l'invention, les moyens de traitement 7 comprennent une carte électronique et un moyen d'initialisation ou de remise à zéro de l'affichage. La fonction d'initialisation est par exemple exécutée à l'aide de la carte électronique.

Selon un exemple de réalisation du dispositif conforme à l'invention, la sonde de mesure 5 coopère avec les moyens de traitement 7 par l'intermédiaire d'une liaison filaire 8.

Selon un autre exemple de réalisation du dispositif conforme à l'invention, non représenté, la sonde de mesure 5 coopère avec les moyens de traitement 7 par l'intermédiaire d'une liaison sans fil comprenant un émetteur agencé sur la sonde de mesure 5 et un récepteur relié aux moyens de traitement 7.

La figure 2 est une représentation selon une vue en perspective d'un exemple de réalisation du dispositif de centrage conforme à l'invention.

Selon un exemple de réalisation conforme à l'invention, le dispositif d'aide au centrage comprend un moyen pour ajuster la position de montage de la sonde de mesure 5 sur la bague d'adaptation 4, permettant ainsi de positionner ladite sonde de mesure 5 à une distance optimale de l'outil 1.

Le moyen pour ajuster la distance entre la sonde de mesure 5 et l'outil 1 comprend d'une part un perçage radial 9 traversant, effectué dans la bague d'adaptation 4 et d'autre part une goupille élastique engagée dans ledit perçage radial 9. La goupille élastique permet de faire coulisser la sonde de mesure 5 dans le perçage tout en retenant en place ladite sonde de mesure 5 dès qu'elle a atteint son écartement optimal par rapport à l'outil 1.

Avantageusement, la bague d'adaptation 4 comporte un taraudage 10, orthogonal au perçage radial 9 et débouchant sur ledit perçage radial 9. L'engagement d'une vis dans le taraudage 10 permet ainsi de verrouiller la sonde de mesure 5 sur la bague d'adaptation 4 lorsque la position optimale est atteinte. Cette dernière correspond par exemple à un écartement inférieur à un millimètre pour un détecteur inductif.

La figure 3 est une représentation selon une vue en perspective d'un exemple de réalisation du dispositif de canon tournant 3 d'une machine de décolletage 1, sur lequel est monté la bague d'adaptation 4.

Le dispositif de canon tournant 3 présente un nez 3a sur lequel est montée et fixée la bague d'adaptation 4. Ce montage est effectué avec un alésage 4a axial que présente la bague d'adaptation 4.

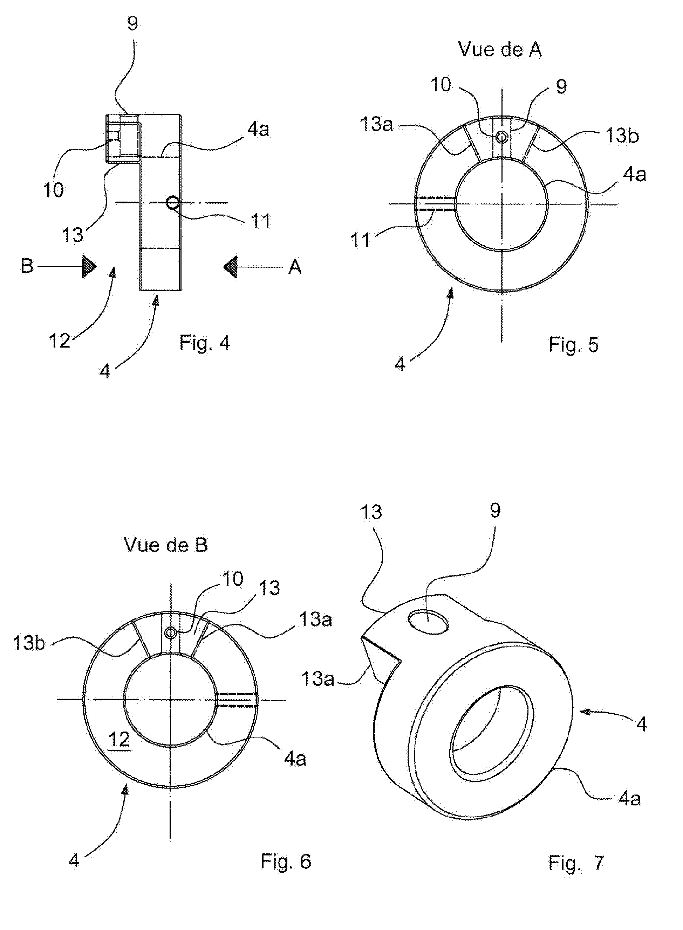

La bague d'adaptation 4 est représentée plus en détails aux figures 4 à 7. La figure 4 est ainsi une vue de profil de la bague d'adaptation 4, la figure 5 est une vue selon la direction A de la bague d'adaptation 4 de la figure 4, et la figure 6 est une vue selon la direction B de la bague d'adaptation de la figure 4. La figure 7 est une vue en perspective de la bague d'adaptation 4.

Avantageusement, un taraudage complémentaire 11, traversant, est ménagé radialement dans la bague d'adaptation 4. L'engagement d'une vis dans le taraudage complémentaire 11 permet de verrouiller la bague d'adaptation 4 sur le nez 3a. La bague d'adaptation 4 peut alors tourner avec le dispositif de canon tournant 3 pour les opérations de centrage de l'outil 1.

Selon un exemple de réalisation du dispositif conforme à l'invention, la bague d'adaptation 4 présente une forme ajourée avec un ou plusieurs dégagements de matière pour permettre un contrôle visuel du positionnement initial de la sonde de mesure 5 par rapport au corps cylindrique de l'outil 1 dans sa position de travail. Ces dégagements de matière permettent ainsi de réaliser des zones d'accès visuel 12 pour l'opérateur chargé de procéder au centrage de l'outil 1.

Dans l'exemple de réalisation tel qu'illustré aux figures, la bague d'adaptation 4 présente sur une portion annulaire et axiale 13, une longueur plus grande. C'est cette portion annulaire et axiale 13, qui délimite les zones d'accès visuel 12, s'étendant entre des extrémités annulaires 13a et 13b de la portion annulaire 13. Les zones d'accès visuel 12 constituent donc géométriquement, la partie virtuelle complémentaire à la portion annulaire et axiale 13 pour constituer un cylindre virtuel complet.

Avantageusement, le dispositif d'aide au centrage comprend un jeu de bagues d'adaptation 4, chacune des bagues d'adaptation 4 étant destinée à être fixée sur le nez 3a d'un dispositif de canon tournant 3 particulier présentant des dimensions particulières.

Le dispositif conforme à l'invention permet ainsi de mettre en oeuvre un procédé de centrage d'un outil 1.

Selon une étape a) le procédé consiste à monter l'outil 1 dans la broche porte-outil 6.

Ensuite, selon une étape b), on fixe la sonde de mesure 5 de distances sur le nez 3a du dispositif de canon tournant 3. On fixe ainsi la bague d'adaptation 4 sur le nez 3a, puis on fixe la sonde de mesure 5 sur la bague d'adaptation 4.

Selon une étape c), on déplace la broche porte-outil 6 pour amener le corps cylindrique de l'outil 1 en regard de la sonde de mesure 5.

Selon une étape d), tourne le dispositif de canon tournant 3 pour placer la sonde de mesure 5 dans une première position de mesure.

Les étapes précédentes sont par exemple effectuées manuellement par un opérateur. Ce dernier vérifie également que la sonde de mesure 5 est disposée à une distance optimale, par exemple inférieure à 1 mm, du corps cylindrique de l'outil 1, avant d'effectuer des mesures. Cette vérification est facilitée par la forme ajourée de la bague d'adaptation 4.

Le procédé consiste ensuite, selon une étape e), à effectuer au moins une première mesure de la distance séparant la sonde de mesure 5 de l'outil 1.

Selon une étape f), on utilise la première mesure pour initialiser la sonde de mesure 5.

Ensuite, selon une étape g), on tourne le dispositif de canon tournant 3 pour placer la sonde de mesure 5 dans une seconde position de mesure, espacée angulairement d'environ 180° de la première position de mesure.

Selon une étape h), on effectue, une fois la sonde de mesure 5 initialisée, au moins une mesure complémentaire de la distance séparant la sonde de mesure 5 de l'outil 1.

Selon une étape i), le procédé consiste ensuite à utiliser la valeur de la deuxième mesure, correspondant à un écart de centrage selon une direction déterminée, pour corriger la position de la broche porte-outil 6 et annuler l'écart de centrage de l'outil 1 dans ladite direction déterminée.

Selon une étape j), on tourne ensuite le dispositif de canon tournant 3 pour placer la sonde de mesure 5 dans une troisième position de mesure, espacée angulairement d'environ 90° de la première position de mesure et on reprend les étapes h) et i) précédentes.

A l'issue de ces opérations, l'outil 1 se trouvant dans sa position de travail est donc centré avec une très grande précision.

Selon un exemple de mise en oeuvre, le procédé conforme à l'invention consiste à afficher le résultat de la première mesure au cours de l'étape e) et à ramener à zéro l'affichage au cours de l'étape f). Cette opération est contrôlée visuellement sur l'affichage par l'opérateur.

Selon un exemple de mise en oeuvre, le procédé conforme à l'invention consiste à afficher le résultat de la seconde mesure au cours de l'étape h) et à déplacer la broche porte-outil 6 pour ramener l'affichage à zéro au cours de l'étape i) en partant de la seconde valeur mesurée. Cette opération est également contrôlée visuellement sur l'affichage par l'opérateur.

L'opérateur chargé de centrer l'outil 1, utilise donc un écran d'affichage 7b du boîtier 7a, pour initialiser la sonde de mesure 5 et pour contrôler le déplacement de la broche porte-outil 6. Ce déplacement est effectué par exemple manuellement par l'opérateur.

Selon un autre exemple de mise en oeuvre, le procédé conforme à l'invention consiste à utiliser des moyens automatisés de la machine de décolletage 2 pour mettre en oeuvre au moins certaines étapes du procédé de centrage.

Les valeurs mesurées par la sonde de mesure 5 sont par exemple lues et enregistrées par les moyens de commande et de contrôle automatisés de la machine de décolletage 2, avant d'être traitées pour générer des signaux de commande de déplacement de la broche porte-outil 6 à des fins de centrage.

Les moyens de commande et de contrôle automatisés comprennent avantageusement des programmes informatiques permettant de piloter automatiquement les étapes précités. Les moyens de traitement 7 sont alors avantageusement intégrés à la machine de décolletage 2.

Il est envisageable de mettre en oeuvre le procédé de centrage conforme à l'invention de manière automatisée pour au moins certaines étapes. Il suffit de charger une machine de décolletage 2, comportant des axes numériques, avec au moins un logiciel adéquat.

A titre d'exemple de mise en oeuvre, on peut placer la bague d'adaptation 4 sur le nez 3a, présenter l'outil 1 de manière manuelle ou automatique dans ladite bague d'adaptation 4, ajuster manuellement le positionnement de la sonde de mesure 5 sur la bague d'adaptation 4, calculer l'indexage automatique de la bague d'adaptation 4 par rapport au porte-canon, effectuer automatiquement les mesures et effectuer les opérations de correction sur les axes automatiquement. Un cycle de mesures supplémentaire, à des fins de contrôle, peut avantageusement compléter les étapes précédentes.

ll est évident que la présente description ne se limite pas aux exemples explicitement décrits, mais comprend également d'autres modes de réalisation et/ou de mise en oeuvre. Ainsi, une caractéristique technique décrite ou une étape de mise en oeuvre décrite peut être remplacée respectivement par une caractéristique technique équivalente ou une étape équivalente, sans sortir du cadre de la présente invention.

## Revendications

1. Procédé de centrage d'un outil (1) ou d'une broche porte-outil (6) d'une machine de décolletage (2) comportant un dispositif de canon tournant (3),
**caractérisé en ce qu'**il consiste à :
- a) monter l'outil (1) dans une broche porte-outil (6),
- b) fixer une sonde de mesure (5) de distances sur le nez du dispositif de canon tournant (3) ou sur une pince de canon tournant,
- c) déplacer la broche porte-outil (6) pour amener le corps de l'outil (1) en regard de la sonde de mesure (5),
- d) tourner le dispositif de canon tournant (3) pour placer la sonde de mesure (5) dans une première position de mesure,
- e) effectuer au moins une première mesure de la distance séparant la sonde de mesure (5) de l'outil (1),
- f) utiliser la première mesure pour initialiser la sonde de mesure (5),
- g) tourner le dispositif de canon tournant (3) pour placer la sonde de mesure (5) dans une seconde position de mesure, espacée angulairement d'environ 180° de la première position de mesure,
- h) effectuer au moins une mesure complémentaire de la distance séparant la sonde de mesure (5) de mesure de l'outil (1),
- i) utiliser la valeur de la deuxième mesure, correspondant à un écart de centrage selon une direction déterminée, pour corriger la position de la broche porte-outil (6) et annuler l'écart de centrage,
- j) tourner le dispositif de canon tournant (3) pour placer la sonde de mesure (5) dans une troisième position de mesure, espacée angulairement d'environ 90° de la première position de mesure et reprendre les étapes h) et i).

2. Procédé de centrage selon la revendication 1, **caractérisé en ce qu'**il consiste à utiliser un détecteur inductif comme sonde de mesure (5).

3. Procédé de centrage selon la revendication 2, **caractérisé en ce qu'**il consiste à vérifier que la sonde de mesure (5) est disposée à un distance optimale de la partie cylindrique de l'outil (1) avant d'effectuer des mesures.

4. Procédé de centrage selon l'une quelconque des revendications 1 à 3, **caractérisé en ce qu'**il consiste à afficher le résultat de la première mesure au cours de l'étape e) et à ramener à zéro l'affichage au cours de l'étape f).

5. Procédé de centrage selon l'une quelconque des revendications 1 à 4, **caractérisé en ce qu'**il consiste à afficher le résultat de la seconde mesure au cours de l'étape h) et à déplacer la broche porte-outil (6) pour ramener l'affichage à zéro au cours de l'étape i).

6. Procédé de centrage selon l'une quelconque des revendications 1 à 5, **caractérisé en ce qu'**il consiste à utiliser des moyens automatisés de la machine de décolletage (2) pour mettre en oeuvre au moins certaines des étapes a) à j).

7. Dispositif d'aide au centrage d'un outil sur une machine de décolletage (2) comportant un dispositif à canon tournant (3),
**caractérisé en ce qu'**il comprend :
- une bague d'adaptation (4) destinée à être fixée et solidarisée en rotation sur un nez (3a) du dispositif de canon tournant (3) ou sur une pince de canon tournant,
- une sonde de mesure (5) de distances montée sur la bague d'adaptation de manière à venir en regard du corps de l'outil (1), lequel est monté dans une broche porte-outil (6) de la machine de décolletage (2), la bague d'adaptation (4) permettant de disposer la sonde de mesure (5) dans au moins trois positions de mesure distinctes,
- des moyens de traitement (7) coopérant avec la sonde de mesure (5) pour traiter les valeurs mesurées par ladite sonde de mesure (5) et pour fournir des informations sur l'amplitude de déplacement à effectuer par la broche porte-outil (6) de manière à corriger l'écart de centrage de l'outil (1).

8. Dispositif d'aide au centrage selon la revendication 7, **caractérisé en ce que** la sonde de mesure (5) est un détecteur inductif.

9. Dispositif d'aide au centrage selon la revendication 7 ou 8, **caractérisé en ce que** les moyens de traitement (7) comprennent un boîtier (7a) de calcul, de mise en forme et d'affichage des valeurs mesurées par la sonde de mesure (5).

10. Dispositif d'aide au centrage selon la revendication 9, **caractérisé en ce que** les moyens de traitement (7) comprennent une carte électronique et un moyen d'initialisation ou de remise à zéro de l'affichage.

11. Dispositif d'aide au centrage selon l'une quelconque des revendications 7 à 10, **caractérisé en ce que** la sonde de mesure (5) coopère avec les moyens de traitement (7) par l'intermédiaire d'une liaison filaire (8).

12. Dispositif d'aide au centrage selon l'une quelconque des revendications 7 à 10, **caractérisé en ce que** la sonde de mesure (5) coopère avec les moyens de traitement (7) par l'intermédiaire d'une liaison sans fil comprenant un émetteur agencé sur la sonde de mesure (5) et un récepteur relié aux moyens de traitement (7).

13. Dispositif d'aide au centrage selon l'une quelconque des revendications 7 à 12, **caractérisé en ce qu'**il comprend un moyen pour ajuster la position de montage de la sonde de mesure (5) sur la bague d'adaptation (4), permettant ainsi de positionner ladite sonde de mesure (5) à une distance optimale de l'outil (1).

14. Dispositif d'aide au centrage selon l'une quelconque des revendications 7 à 13, **caractérisé en ce qu'**il comprend un jeu de bagues d'adaptation (4), chacune des bagues d'adaptation (4) étant prévue pour être fixée sur le nez (3a) d'un dispositif de canon tournant (3) présentant des dimensions particulières.

15. Dispositif d'aide au centrage selon l'une quelconque des revendications 7 à 14, **caractérisé en ce que** la bague d'adaptation (4) présente au moins un dégagement de matière pour permettre un contrôle visuel du positionnement de la sonde de mesure (5) par rapport à l'outil (1) dans sa position de travail.

16. Machine de décolletage (2) comportant un dispositif de canon tournant (3) et des moyens de commande et de contrôle automatisés pour piloter le fonctionnement de ladite machine, **caractérisée en ce qu'**elle comprend un dispositif d'aide au centrage conforme à l'une quelconque des revendications 7 à 15.

17. Machine de décolletage (2) selon la revendication 16, **caractérisée en ce que** les moyens de traitement (7) sont intégrés aux moyens de commande et de contrôle automatisés.
